# EUROPEAN PATENT SPECIFICATION

(11) **EP 1 293 812 B1**
(45) Date of publication and mention of the grant of the patent: **28.04.2010**
(21) Application number: 02019880.0
(22) Date of filing: 10.09.2002
(51) Int. Cl.: G02B 6/255

(54) **Apparatus and method for heating optical fiber using electric discharge**
Vorrichtung und Verfahren zur Erhitzung einer optischen Faser mittels elektrischer Entladung
Appareil et méthode pour chauffer une fibre optique par décharge électrique

(30) Priority: 13.09.2001 JP 2001277582
(43) Date of publication of application: 19.03.2003
(73) Proprietor: Sumitomo Electric Industries, Ltd., Osaka-shi, Osaka (JP)
(72) Inventor: Yamada, Eiichiro, Yokohama Works, Yokohama-shi, Kanagawa (JP); Saito, Kazuhito, Yokohama Works, Yokohama-shi, Kanagawa (JP); Tamura, Mitsuaki, Yokohama Works, Yokohama-shi, Kanagawa (JP)
(74) Representative: HOFFMANN EITLE

(56) References cited:
- EP-A- 1 065 536
- EP-A2- 0 320 978
- DE-A- 3 735 886
- GB-A- 2 259 996
- JP-A- 08 082 721
- PATENT ABSTRACTS OF JAPAN vol. 2000, no. 13, 5 February 2001 (2001-02-05) -& JP 2000 292648 A (SUMITOMO ELECTRIC IND LTD), 20 October 2000 (2000-10-20)
- PATENT ABSTRACTS OF JAPAN vol. 015, no. 344 (P-1245), 30 August 1991 (1991-08-30) -& JP 03 130705 A (NIPPON TELEGR & TELEPH CORP), 4 June 1991 (1991-06-04)

## Description

### BACKGROUND OF THE INVENTION

### FIELD OF THE INVENTION

The present invention relates to a method and an apparatus for heating a neighborhood of a fusion splicing part of a plurality of optical fibers of an optical fiber ribbon using electric discharge, after the plurality of the optical fibers having different mode-field diameters are fusion spliced by the electric discharge.

### DESCRIPTION OF THE RELATED ART

An ordinal practice for connecting optical fibers of an optical fiber ribbon is performed by mass fusion splicing of a plurality of the optical fibers in one operation. In this operation, while melting both ends of optical fiber ribbons at the same time, the optical fibers in the optical fiber ribbons are fusion spliced and make them abut against each other by using an energy of an electric discharge produced between a pair of discharge electrodes.

In recent years, efforts are underway to develop hybrid optical fibers which are the combination of ordinary single-mode optical fibers and functional optical fibers for use in wavelength division multiplex transmission and in Raman amplifier. In the development of such hybrid optical fibers, it is important to improve not only the characteristics of the optical fibers but also the optical fiber coupling technology.

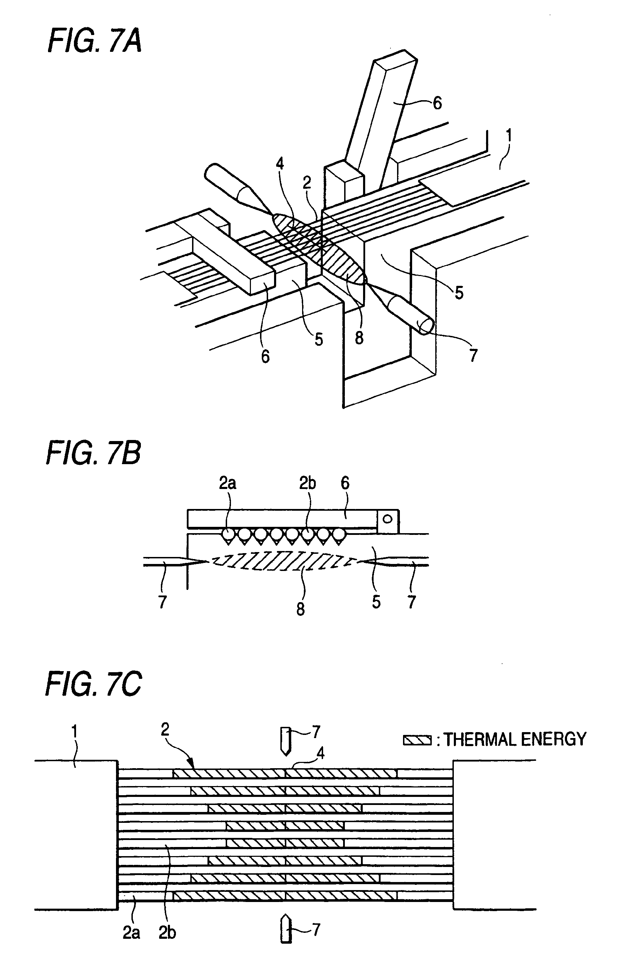

Fig. 7A to 7C shows an outline for connection method by using fusion splicing of the optical fibers with the electric discharge. Fig. 7A is a perspective view showing the connection method. Fig. 7B is a partial view showing how discharge occurs, and Fig. 7C shows the profile of thermal energy applied to individual optical fibers. In Fig. 7A to 7C, numeral 1 denotes an optical fiber ribbon, 2 is an optical fiber of the optical fiber ribbon 1, 4 is a fusion splice point, 5 is a V-grooved substrate, 6 is a holding member, 7 is a discharge electrode, and 8 is an arc. To perform fusion splicing, the operator first strips a coating off from the optical fiber ribbon 1 at the tip thereof, thereby to expose the optical fibers 2. The optical fibers 2 are held in position by means of the V-grooved substrates 5 and the holding members 6. Then, the optical fibers 2 are adjusted such that the end faces of every two optical fibers are opposed to each other with a predetermined gap. Thereafter, an arc 8 is generated between a pair of discharge electrodes 7 positioned offset from the arrangement plane of the optical fibers 2; when the ends of every two optical fibers 2 are fused, either one optical fiber 2 is pushed against the other optical fiber or both fibers 2 are pushed in opposite directions, whereby all optical fibers 2 are fusion spliced in one operation.

However, if a plurality of optical fibers 2 are arranged in the same plane as shown in Fig. 7B, an optical fiber 2a positioned away from the center of the fiber array and an optical fiber 2b positioned closer to its center receive different amounts of thermal energy, since the closer to the tip of either discharge electrode 7, the higher the energy of electric discharge the optical fibers 2 receive. The thermal energy received also varies since the outer optical fiber 2a blocks the inner optical fiber 2b. Fig. 7C shows the profile of thermal energy applied to a plurality of optical fibers 2; obviously, more thermal energy is applied to the outer optical fiber 2a compared with the inner optical fiber 2b. The result is an uneven fusion splicing.

In the case of splicing a functional optical fiber with an ordinary single-mode optical fiber having a different mode-field diameter to each other, arc-discharge-based fusion splicing alone is difficult to achieve a practically acceptable coupling loss. Therefore, a neighborhood of the fusion splicing part 4 is given an additional heating and at least the core diameter of either one of the optical fibers are enlarged progressively (tapered) in a smooth shape so that they have the same mode-field diameter at the splice point. This method is previously known as a thermally-diffused expanded core (hereunder, referred to TEC) process. A TEC described in Japanese Patent Registered No. 2,618,500, for instance.

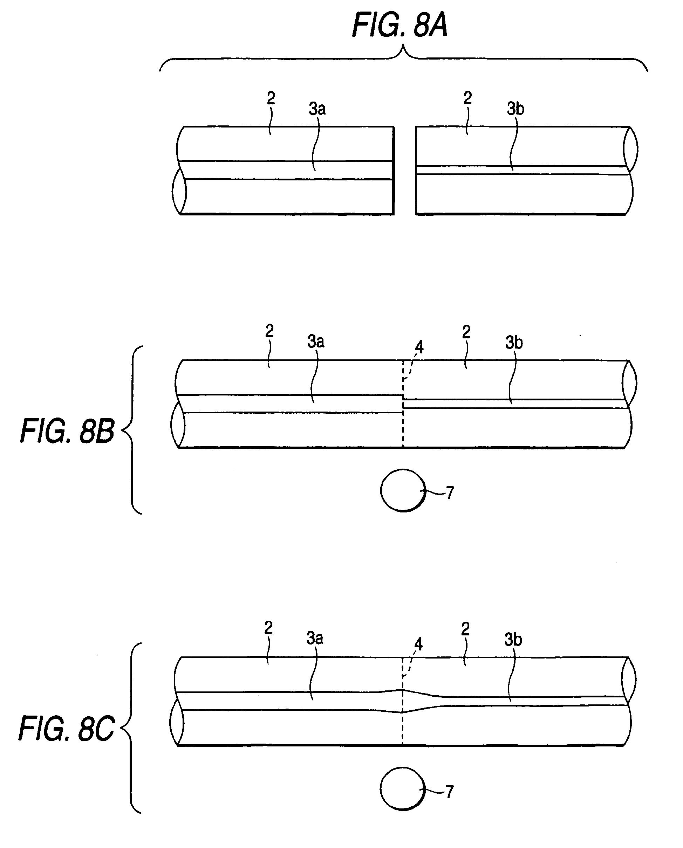

Fig. 8 shows an example of the process of applying an additional heating after fusion splicing. Fig. 8A shows two optical fibers with different mode-field diameters as they are disposed in a mating position in preparation for fusion splicing; Fig. 8B shows the two optical fibers that have been fusion spliced using arc discharge; and Fig. 8C shows the splice that has been given heating to perform the TEC process. In Fig. 8, numerals 3a and 3b refer to the core portion; the other numerals are identical to those used in Fig. 7 and this is in order to omit detailed explanation.

The optical fibers 2 to be fusion spliced have the same outer cladding diameter but the cores 3a and 3b differ in diameter and relative refractive index difference; hence, these optical fibers have different mode-field diameters. After placing the optical fibers 2 such that their end faces to be coupled are opposed to each other as shown in Fig. 8A, the ends of the two optical fibers are fused together using arc discharge as shown in Fig. 8B. If only the ends of the two optical fibers are fused together using arc discharge, a discontinuous of the two optical fiber or mismatched splice are generated by the difference in mode-field diameter so that splice loss shows higher value.

In order to solve this problem, the neighborhood of the fusion splicing part 4 is heated using arc discharge to effect the TEC treatment (see Fig. 8c). The heating is performed under such temperature and time conditions that the optical fibers 2 themselves are not melted but that a dopant added to the cores 3a and 3b thermally diffuses into the claddings. The dopant increases refractive index of the core of the optical fibers.

In this case the fiber has a sufficiently smaller core diameter than the other optical fiber and has larger relative index difference.

As a result of this heating, the diameter of the core 3b of the optical fiber is increased progressively (tapered) so that the discontinuity or mismatch from the core 3a of the other optical fiber is reduced. Hence, the splice loss is reduced. If the above-described TEC treatment is performed after fusion splicing of such dissimilar optical fibers, the mode-field diameter of the optical fiber with the smaller core diameter is brought progressively nearer to that of the other optical fiber thereby to reduce the splice loss. As already mentioned, the method of heating by applying electric discharge in the manner described with reference to Fig. 7 produces an uneven fusion since more thermal energy is applied to the outer optical fiber 2a than to the inner optical fiber 2b. In this process of heating during fusion, TEC also proceeds to some extent. If heating for TEC treatment is effected in the same manner as fusion splicing, the TEC treatment of the inner optical fiber 2b proceeds so slowly that by the time it is completed, excessive thermal energy has been applied to the outer optical fiber 2a, thereby to increase the splice loss rather than decreasing it.

JP 08-082721 A relates to a heater for fusion spliced parts of multiple optical fiber cables. According to this disclosure, to lessen the connection loss of a juncture, a microtorch constituting the important part of a heater has a flat opening and is provided with a constricted part at three points at equal intervals in the major axis direction of the flat opening. The constricted parts of the flat type opening have the purpose of uniformizing the temperature distribution of gaseous flame tips in the major axis direction of the flat type opening.

EP 0 320 978 A2 relates to a method of measuring the quantity of heat applied to optical fibers. In the method of measuring a quantity of heat, the distance between the position of an end of an exposed fiber portion before heating and the position of the end after heating is measured and the quantity of heat applied to the end of the exposed fiber portion is calculated based on the distance.

GB 2 259 996 A relates to mode field conversion optical fiber components. A mode field conversion fiber component is formed by fusion connecting of end surfaces of two optical fibers having different mode fields. The mode field of the two optical fibers are conformed to each other at the interface and are continuously varied near the interface.

JP 2000-292648 A relates to an electric discharge device for optical fibers and an electric discharge machining method for an end face of an optical fiber. An electric discharge device for optical fiber machining of all optical fibers equally in the tape like coated optical fibers is disclosed.

### SUMMARY OF THE INVENTION

It is an object of the present invention to provide a method of heating optical fibers by an electric discharge, which is capable of applying substantially uniform thermal energy to all optical fibers of a ribbon with concentric core portions by the combination of electric discharge-based heating for fusion splicing and an electric discharge-based heating for TEC treatment.

It is an another object of the invention is to provide an apparatus for implementing the method.

A method for heating a first optical fiber ribbon and a second optical fiber ribbon an electric discharge is disclosed in claim 1. The apparatus of the invention for heating a neighborhood of a fusion splicing part of an optical fibers by an electric discharge after fusion splicing of the optical fibers is disclosed in claim 7.

### BRIEF DESCRIPTION OF THE DRAWINGS

Figs. 1A to 1C are diagrams illustrating the first embodiment;
Figs: 2A to 2C are diagrams illustrating the second embodiment;
Figs. 3A to 3C are diagrams illustrating the third embodiment;
Figs. 4A to 4C are diagrams illustrating three profiles of thermal energy as applied to optical fibers in the invention;
Figs. 5A and 5B show diagrammatically two examples of the optical fiber holding apparatus that can be used in the invention;
Figs. 6A and 6B show diagrammatically two examples of the electrode unit that can be used in the invention;
Figs. 7A to 7C are diagrams illustrating a method of the related art for fusion splicing of optical fibers; and
Figs. 8A - 8C are diagrams illustrating a method of TEC treatment of the related art.

### DETAILED DESCRIPTION OF THE PREFERRED EMBODIMENTS

In the invention, a plurality of optical fibers of a optical fiber ribbon having different mode-field diameters are simultaneously fusion spliced by an ordinary method of arc discharge as shown in Fig. 7. Thereafter, a neighborhood of a fusion splicing part of the optical fiber ribbons is heated using arc discharge to correct the discontinuity or mismatch of the optical fiber ribbons due to a difference of the mode-field diameter at the fusion splicing point (this treatment is hereunder referred to as TEC treatment).

Such a heating is performed under such temperature and time conditions that optical fibers 2 themselves are not melted but that dopant, which is added in the core region to increase refractive index, thermally diffuses into the cladding region.

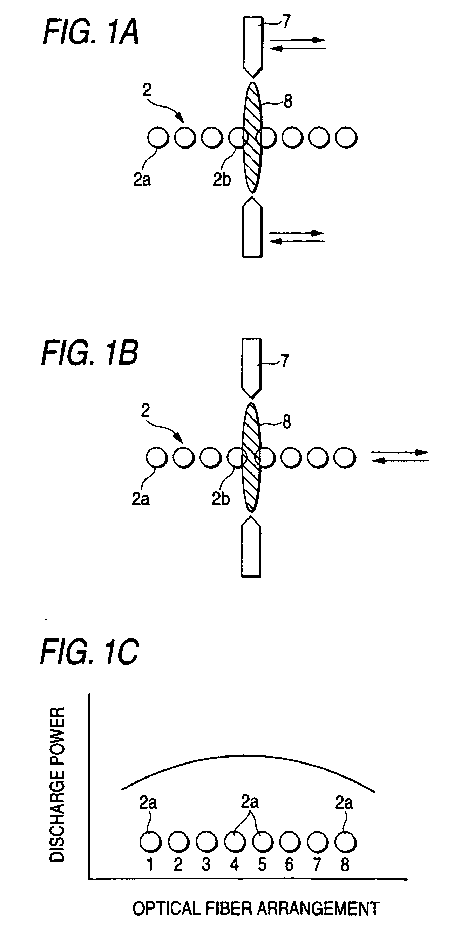

We describe a first embodiment with reference to Fig. 1. Fig. 1A shows the positions of discharge electrodes relative to optical fibers; Fig. 1B shows a modification of the setup shown in Fig. 1A; and Fig. 1C shows the relationship between a discharge power applied to the discharge electrodes and the arrangement of the optical fibers. The numerals used in Fig. 1 are identical to those used in Fig. 8 and this is in order to omit detailed description.

The method of applying the heating for TEC treatment will be shown in Figs. 1A and 1B. A pair of discharge electrodes 7 for generating arc discharge is provided such that they are perpendicular to the plane (horizontal) in which optical fibers 2 are arranged. The discharge electrodes 7 are moved with relative to the optical fibers 2 in the direction of fiber arrangement so that a plurality of the optical fibers 2 are heated locally at a time. Fig. 1A shows the case that while fixing the positions of the optical fibers 2 which are arranged at a predetermined space, the discharge electrodes 7 are moved for the heating of the optical fibers 2. Fig. 1B shows the case that while fixing the positions of the discharge electrodes 7, the optical fibers 2 are moved for the heating. Although not shown, the discharge electrodes 7 are also moved with relative to the optical fibers 2 in the axial direction thereof such that the neighborhood of the fusion splicing part 4 is heated over a predetermined range for TEC treatment. The movement of the discharge electrodes 7 in the axial direction of the optical fibers can also be realized either by moving the discharge electrodes 7 or by moving the optical fibers 2. The mechanism and other features for moving the optical fibers 2 and the discharge electrodes 7 will be described later.

In the first embodiment shown in Fig. 1, depending on the fiber, energy is changed by varying the discharge power so that TEC treatment is appropriately effected.

As shown in Fig. 1C, stronger discharge power is applied to the inner optical fiber 2b and weaker discharge power is applied to the outer optical fiber 2a. In order to adjust discharge power, either discharge current or discharge voltage or both are varied. As a result, more thermal energy is applied to the inner optical fiber 2b than to the outer optical fiber 2a. Therefore, heating is performed with thermal energy which is applied in a pattern reverse to that employed in fusion splicing. Hence, considering both fusion splicing and TEC treatment, a generally uniform pattern of thermal energy can be applied to all optical fibers involved.

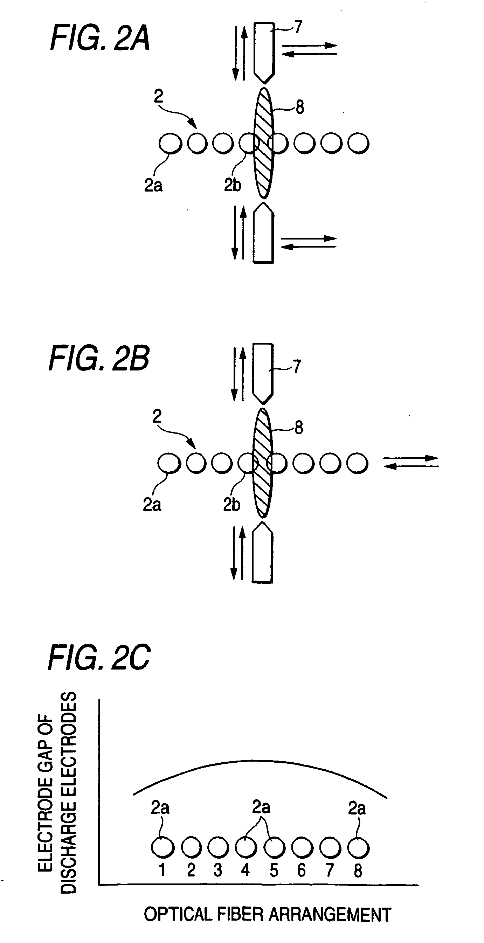

The second embodiment is shown in Fig. 2. Fig. 2A shows the positions of discharge electrodes relative to optical fibers; Fig. 2B shows a modification of the setup shown in Fig. 2A; and Fig. 2C shows the relationship between the electrode gap of the discharge electrodes 7 and the arrangement of optical fibers. The numerals used in Fig. 2 are identical to those used in Fig. 1 and this is in order to omit detailed description.

The method of performing heating for TEC treatment in the second embodiment is as well as in the case shown in Fig. 1; the pair of the discharge electrodes 7 are provided such that they are perpendicular to the plane (horizontal) in which optical fibers 2 are arranged. The discharge electrodes 7 are moved with relative to the optical fibers 2 in the direction of fiber arrangement so that a plurality of optical fibers 2 are locally heated at a time. Fig. 2A shows the case that while fixing the positions of optical fibers 2 arranged at a predetermined space, the discharge electrodes 7 are moved for the heating of the optical fibers 2. Fig. 2B shows the case that while fixing positions of the discharge electrodes 7, the optical fibers 2 are moved for the heating.

Although not shown, the discharge electrodes 7 are also moved with relative to the optical fibers in the axial direction of optical fibers 2 such that the neighborhood of the fusion splicing part is heated over a predetermined range to effect TEC treatment. This is also the same as in the case shown in Fig. 1.

In the second embodiment, the electrode gap or the distance between discharge electrodes 7 is changed for a respective optical fiber so that a varying amount of heat is applied to effect TEC treatment. As shown in Fig. 2C, the electrode gap is increased for the inner optical fiber 2b but decreased for the outer optical fiber 2a. If the discharge current is constant, a higher discharge voltage is obtained by increasing the electrode gap so that discharge energy is increased, which is equivalent to applying an increased discharge power as in the case shown in Fig. 1. As a result, more thermal energy is applied to the inner optical fiber 2b than to the outer optical fiber 2a. Heating is performed with thermal energy being applied in a pattern reverse to that employed in fusion splicing. Hence, considering both fusion splicing and TEC treatment, a generally uniform pattern of thermal energy can be applied to all optical fibers involved.

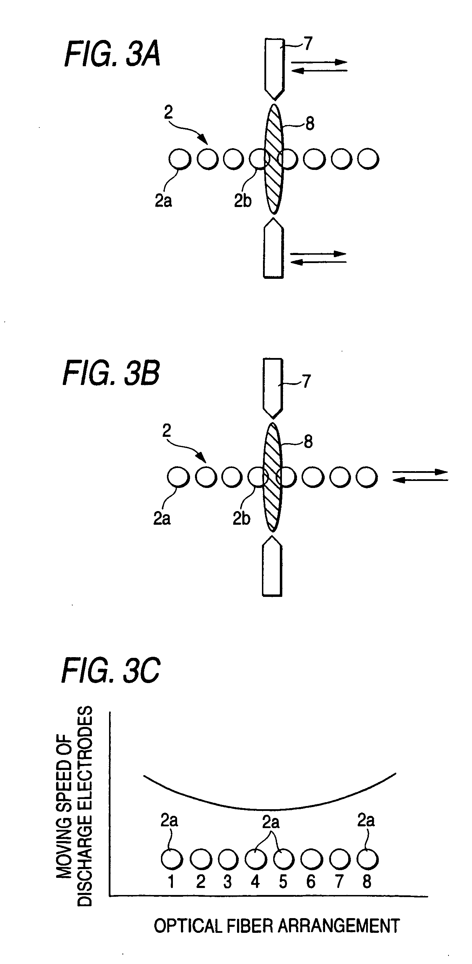

Fig. 3 shows a third embodiment. In particular, Fig. 3A shows the positions of discharge electrodes 7 relative to optical fibers; Fig. 3B shows a modification of the setup shown in Fig. 3A; and Fig. 3C shows a moving speed of the discharge electrodes with relative to the optical fibers. The numerals used in Fig. 3 are identical to those used in Fig. 1 and this is in order to omit detailed description. The method of performing heating for TEC treatment in the third embodiment is the same as in the case shown in Fig. 1; a pair of discharge electrodes 7 are provided such that they are perpendicular to the plane (horizontal) in which optical fibers 2 are arranged. The discharge electrodes 7 are moved with relative to the optical fibers 2 in the direction of fiber arrangement so that a plurality of optical fibers 2 are heated at a time.

Fig. 3A shows the case that while fixing the positions of optical fibers 2 arranged at a predetermined space, the discharge electrodes 7 are moved. Fig. 3B shows the case that while fixing the discharge electrodes 7, the optical fibers 2 are moved. Although not shown, the discharge electrodes 7 are also moved with relative to the optical fibers 2 in the axial direction thereof such that the neighborhood of the fusion splicing part is heated over a predetermined range to effect TEC treatment and this is also the same as in the case shown in Fig. 1.

In the third embodiment, the moving speed of discharge electrodes 7 is changed locally for a respective optical fiber so that a varying amount of heat is applied to effect TEC treatment. As shown in Fig. 3C, the moving speed is decreased for the inner optical fiber 2b but increased for the outer optical fiber 2a. By decreasing the moving speed, the heating time and the amount of heat applied to the optical fiber can be increased, which is equivalent to applying more heat by increasing discharge power as in the case shown in Fig. 1. As a result, more thermal energy is applied to the inner optical fiber 2b than to the outer optical fiber 2a. Heating is performed with thermal energy being applied in a pattern reverse to that employed in fusion splicing. Hence, considering both fusion splicing and TEC treatment, a generally uniform pattern of thermal energy can be applied to all optical fibers involved.

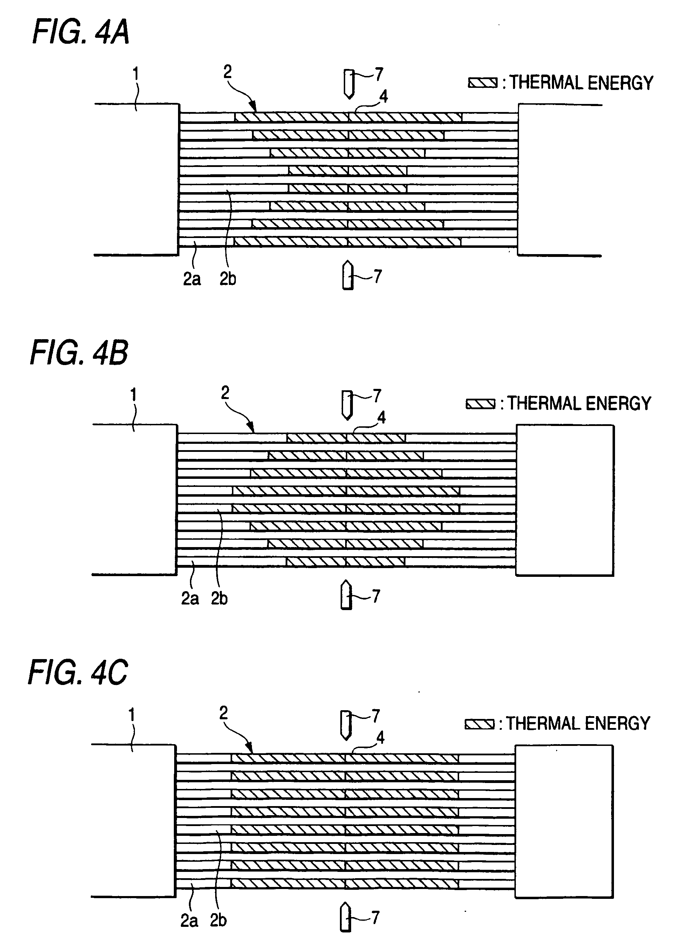

Fig. 4 shows schematically the relationships between the amount of thermal energy and the optical fibers to which it is applied in the three embodiments. In particular, Fig. 4A shows the profile of thermal energy applied in fusion splicing; Fig. 4B shows the profile of thermal energy applied in heating for TEC treatment; and Fig. 4C shows the profile of total thermal energy as applied in both fusion splicing and the heating for TEC treatment. The hatched area corresponds to the thermal energy applied. As Fig. 4A shows, in fusion splicing, more thermal energy is applied to the outer optical fiber 2a and less thermal energy is applied to the inner optical fiber 2b. In contrast, as shown in Fig. 4B, when heating is effected for TEC treatment, less thermal energy is applied to the outer optical fiber 2a and more thermal energy is applied to the inner optical fiber 2b.

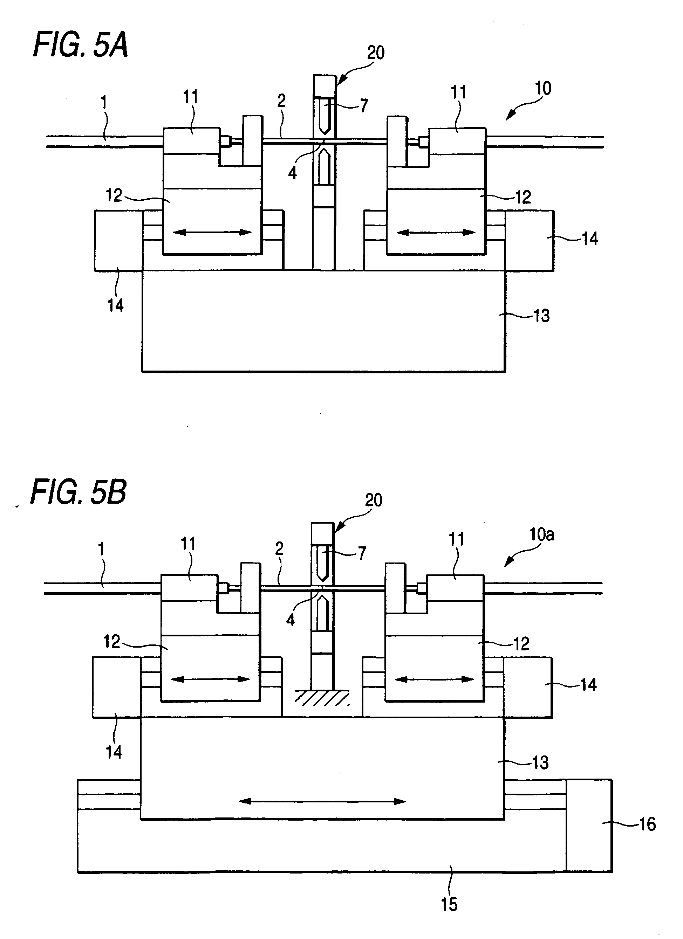

In consequence, as Fig. 4C shows, considering the overall process including fusion splicing and heating for TEC treatment, the total quantity of thermal energy applied to the outer optical fiber 2a can be made almost equal to that applied to the inner optical fiber 2b.
By applying generally uniform thermal energy to all optical fibers 2 involved, any unevenness in fusion splicing can be eliminated and uniform TEC treatment can be performed on all optical fibers. Therefore, it can be performed uniform reduction in coupling loss. The terms "uniform" and "generally uniform" do not mean complete identicalness but allow for a certain range of variations. Fig. 5 shows schematically exemplary optical fiber holding apparatus. Fig. 5A shows a setup adapted to move optical fibers in the axial direction while synchronizing the holders on opposite sides of optical fibers. Fig. 5B shows a modification of the setup shown in Fig. 5A. In Fig. 5A and 5B, numerals 10 and 10a are the optical fiber holding apparatus, 11 is a fiber holder, 12 is a holder drive stage, 13 is a base platform, 14 is a drive mechanism, 15 is a base platform drive stage, 16 is a drive mechanism, and 20 is an electrode unit. The other numerals are identical to those used in Figs. 1 - 4 and this is in order to omit detailed description.

The optical fiber holding apparatus 10, 10a shown in Fig. 5A and 5B are used for heating the neighborhood of the fusion splicing part 4 of optical fibers 2 over a predetermined range in the axial direction. In the setup shown in Fig. 5A, while the discharge electrodes 7 are fixed, the optical fibers 2 are moved. The spliced optical fibers 2 are fixed in position on both sides of the fusion splicing part 4 by means of V-grooved fiber holders 11 and the like. The pair of fiber holders 11 is disposed on the base platform 13 via the holder drive stages 12. The holder drive stage 12 is controlled to move in the axial direction of the optical fibers 2 by the drive mechanisms 14.

The optical fiber holding apparatus 10 shown in Fig. 5A includes the pair of fiber holders 11 individually driven by the associated drive mechanisms 14. The drive mechanisms 14 are controlled to be driven in synchronism by means of control units (not shown).

The optical fiber holding apparatus 10a shown in Fig. 5B is a modified version of the setup shown in Fig. 5A. The optical fiber holding apparatus 10a is one example of fiber holding apparatus that the base platform 13 is disposed on the base platform drive stage 15 in order to be movable. This configuration benefits from a simple control mechanism since the pair of fiber holders 11 need not be individually controlled for drive. On the other hand, in this configuration, the number of parts increases and the overall setup is somewhat bulky.

In Fig. 5A and 5B, the discharge electrodes 7 are shown to be fixed. The optical fibers 2 may be fixed whereas the discharge electrodes 7 are adapted to be capable of moving in the axial direction of the optical fibers 2. In yet another embodiment, the optical fiber holding apparatus 10, 10a may be used as a fiber holding apparatus when ribbons 1 of optical fibers are to be mass fusion spliced in one operation.

In this case, optical fibers 2 may immediately be subjected to TEC treatment without dismounting from the holding apparatus after fusion splicing of the optical fibers 2.

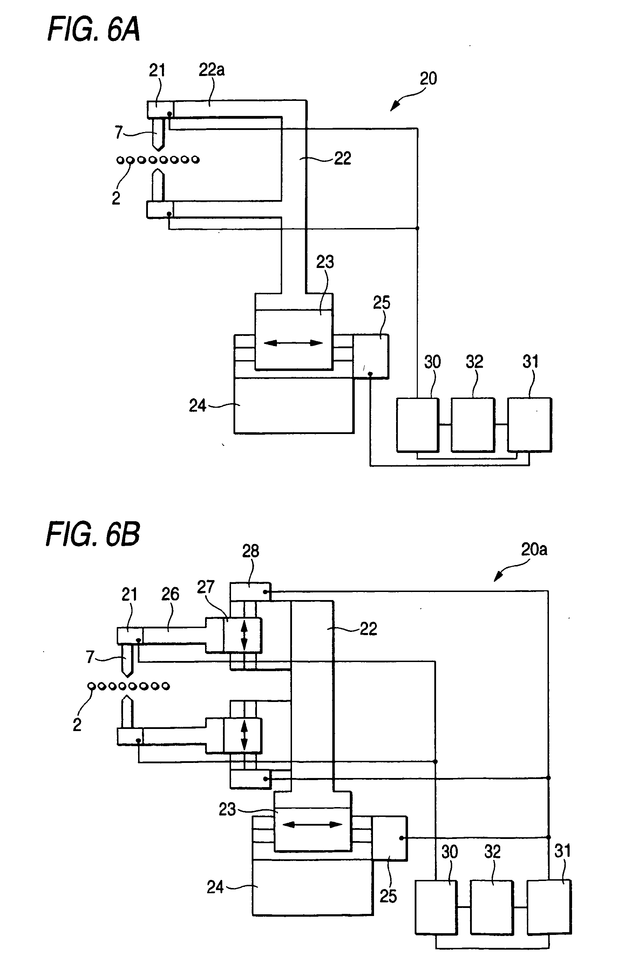

Fig. 6A and 6B show schematically two examples of the electrode unit. In particular, Fig. 6A shows the setup where the discharge electrode gap is constant. Fig. 6B shows the setup where the discharge electrode gap is variable. In Fig. 6A and 6B, numerals 20, 20a refer to the electrode unit, 21 is an electrode mount, 22 is an electrode support column, 23 is a support column drive stage, 24 is a base platform, 25 is a drive mechanism, 26 is an electrode holding arm, 27 is an electrode drive stage, 28 is a drive mechanism, 30 is discharge circuitry, 31 is a control unit, and 32 is a power supply unit. The other numerals are identical to those used in Figs. 1 - 4 and this is in order to omit detailed description.

The electrode unit 20 shown in Fig. 6A is suitable for use in the embodiments of heating illustrated in Figs. 1 and 3. The electrode unit 20 makes the gap between discharge electrodes 7 constant during operation. The electrode unit 20, however, is equipped with adjusting unit (not shown) for setting the discharge electrode height and gap during operation. The electrode unit 20 is so constructed that a pair of discharge electrodes 7 are supported by the associated electrode mounts 21 which are fastened to holding arms 22a extending from the electrode support column 22. The electrode support column 22 is adapted to be movable in the direction of fiber arrangement by means of the support column drive stage 23 disposed on the base platform 24. The support column drive stage 23 is driven with the drive mechanism 25 including a direct drive motor or the like. The drive mechanism 25 is controlled by a control signal from the control unit 31 with a preloaded program.

For use in the mode shown in Fig. 1A, the discharge electrodes 7 are connected to the discharge circuitry 30 so that discharge power is controlled step by step. The discharge circuitry 30 is connected to the control unit 31 and the power supply unit 32. The discharge circuitry 30 adjusts discharge power each time the discharge electrodes 7 are moved in the direction of fiber arrangement.

In this way, the thermal energy applied to the individual optical fibers 2 of a ribbon in a single array can be varied as shown in Fig. 1C. The amount of thermal energy applied to each optical fiber 2 is set as shown in Fig. 4B.

For use in the embodiment shown in Fig. 3A to 3C, the discharge power of the discharge electrodes 7 keeps constant. However, each time the discharge electrodes 7 are moved in the direction of fiber arrangement, their moving speed is controlled by the control unit 31 to adjust the time for which the individual optical fibers 2 of a ribbon are exposed to discharge. The moving speed of the discharge electrodes 7 as they traverse the individual optical fibers 2 in a single array can be altered as shown in Fig. 3C. In this way, the thermal energy applied to each optical fiber can be varied and the amount of thermal energy applied to the individual optical fibers 2 is again set as shown in Fig. 4B.

The electrode unit 20a shown in Fig. 6B is suitable for use in the mode of heating illustrated in Fig. 2A to 2C. The electrode unit 20a makes the gap between discharge electrodes 7 variable. The electrode unit 20a is so constructed that a pair of discharge electrodes 7 are mounted on the associated electrode holding arms 26 via electrode mounts 21. The electrode holding arms 26 are mounted on the electrode drive stages 27 provided vertically on the electrode support column 22; the support column drive stages 27 are adapted to be capable of moving individually in a direction perpendicular to the plane in which the optical fibers are arranged by means of drive units 28 each including a direct drive motor or the like.

As with the setup shown in Fig. 6A, the electrode support column 22 is adapted to be movable in the direction of fiber arrangement by means of the support column drive stage 23 disposed on the base platform 24. The support column drive stage 23 is driven with the drive mechanism 25 including a direct drive motor or the like. The drive mechanisms 25 and 28 are controlled by control signals from the control unit 31 with a preloaded program.

For use in the embodiment shown in Fig. 2A to 2C, a constant current supply unit 32 is used as a discharge circuitry 30 to supply a constant current to the discharge electrodes 7, which are moved at a constant speed in the direction of fiber arrangement. However, as shown in Fig. 2C, the gap between discharge electrodes 7 is altered each time they are moved in the direction of fiber arrangement. If the discharge current between the electrodes is constant, discharge power varies depending on the electrode gap so that the discharge voltage is changed. In this way, the thermal energy applied to each optical fiber can be varied locally. The amount of thermal energy applied to the individual optical fibers is again set as shown in Fig. 4B.

The foregoing description of Fig. 6 assumes a setup of a type in which the discharge electrodes 7 are moved relative to the optical fibers 2. If the optical fibers 2 are to be moved relative to the discharge electrodes 7 as in Fig. 6A, the optical fiber holding apparatus 10, 10a may be equipped with a mechanism for moving each array of optical fibers 2 in the direction of their arrangement. While the foregoing description concerns only the mechanism of moving the discharge electrodes 7 in the direction of fiber arrangement, it should be noted that after movement in the direction of fiber arrangement, the discharge electrodes 7 are also moved relatively in the axial direction of optical fibers 2 so that the neighborhood of their fusion splice is heated over a predetermined range by electric discharge. The movement of the discharge electrodes 7 in the axial direction of optical fibers can be effected in operative association with the drive mechanism(s) in the optical fiber holding apparatus 10, 10a described with reference to Fig. 5. It should also be noted that the heating of the optical fibers 2 by electric discharge is repeated until the neighborhood of the fusion splicing part 4 is given the necessary amount of thermal energy to ensure that the TEC treatment of that area is completed in a substantially uniform way.

As will be apparent from the foregoing description, the present invention ensures that the neighborhood of the fusion splice of optical fibers with concentric core portions is heated as controlled for each optical fiber and. varying amounts of thermal energy can be applied to individual optical fibers. When optical fibers are mass fusion spliced by electric discharge, the state of fusion splice of optical fibers away from the center of the fiber array is not the same as that for optical fibers closer to the center. However, according to the present invention, such uneven fusion can be eliminated by TEC treatment involving heating by electric discharge. In addition, the total quantity of thermal energy including the heat applied during fusion splicing can be made generally uniform over all optical fibers involved; with the result that TEC treatment can be performed uniformly.

## Claims

1. A method for heating a first optical fiber ribbon (1) and a second optical fiber ribbon (1) by an electric discharge (8), the first and second optical fiber ribbons respectively having a plurality of optical fibers (2) arranged parallel to each other in a plane, the method comprising the steps of:
a) fusion splicing the optical fibers of the first and second optical fiber ribbons using electric discharge;
b) disposing at least one pair of discharge electrodes (7) in a direction perpendicular to the plane in which the optical fibers are arranged;
c) heating a neighborhood of a fusion splicing part (4) of the optical fibers of the first and second optical fiber ribbons using the electric discharge generated between the pair of the discharge electrodes, while the pair of the discharge electrodes moves in the direction of arrangement of the optical fibers such that more thermal energy is applied to the optical fibers positioned closer to a center of the arrangement of the optical fibers than to optical fibers positioned away from the center, wherein the total thermal energy applied to all optical fibers by the electric discharge during the fusion splicing step and the heating step is substantially uniform for each of the optical fibers.

2. The method according to claim 1, wherein the optical fibers have different mode-field diameters, and wherein the heating in step c) is performed under such temperature and time conditions that the optical fibers themselves are not melted and that a dopant added to cores of the optical fibers thermally diffuses into claddings of the optical fibers to thereby correct a difference of mode-field diameter in the fusion splicing part.

3. The method according to claim 1 or 2, wherein the thermal energy applied to the optical fibers is controlled by changing a power of the electric discharge according to the position of the optical fibers.

4. The method according to any one of the preceding claims, wherein the thermal energy applied to the optical fibers is controlled by changing a gap between the discharge electrodes according to the position of the optical fibers.

5. The method according to any one of the preceding claims, wherein the thermal energy applied to the optical fibers is controlled by changing a speed at which the discharge electrodes are moved according to the position of the optical fibers.

6. The method according to any one of the preceding claims, wherein the pair of the discharge electrode moves in an axial direction of the optical fibers such that the neighborhood of the fusion splicing part is heated over a predetermined range.

7. An apparatus for heating a neighborhood of a fusion splicing part (4) of optical fibers (2) by an electric discharge (8) after fusion splicing of the optical fibers, the optical fibers being arranged parallel to each other in a plane, the apparatus comprising:
at least one pair of discharge electrodes (7) provided in a direction perpendicular to the plane in which the optical fibers are arranged;
a moving mechanism (20) for moving at least one of the discharge electrodes and the optical fibers in the direction of the arrangement of the optical fibers; and
a control unit (31) for controlling a thermal energy applied to the optical fibers in such a way that more thermal energy is applied to the optical fibers positioned closer to a center of the arrangement of the optical fiber than to the optical fibers positioned away from the center, wherein the total thermal energy applied to all optical fibers resulting from the thermal energy that has been applied by the electric discharge during the fusion splicing step and the thermal energy that is applied by the apparatus with the heating step is substantially uniform for each of the optical fibers.

8. The apparatus according to claim 7, wherein the moving mechanism moves the discharge electrodes relative to the optical fibers.

9. The apparatus according to claim 7, wherein the moving mechanism moves the optical fibers relative to the discharge electrodes.

10. The apparatus according to any one of claims 7 to 9, wherein the moving mechanism is for moving at least one of the discharge electrodes and the optical fibers in an axial direction of the optical fibers.

## Patentansprüche

1. Verfahren zum Erhitzen eines ersten Glasfaserbands (1) und eines zweiten Glasfaserbands (2) mittels einer elektrischen Entladung (8), wobei das erste und zweite Glasfaserband entsprechend eine Mehrzahl optischer Fasern (2) aufweisen, die in einer Ebene parallel zueinander angeordnet sind, wobei das Verfahren die Schritte umfasst:
a) Bindungsspleißen der optischen Fasern des ersten und zweiten Glasfaserbands unter Verwendung einer elektrischen Entladung;
b) Anordnen von wenigstens einem Paar von Entladungselektroden (7) in einer Richtung senkrecht zur Ebene, in der die Glasfasern angeordnet sind;
c) Erhitzen einer Umgebung eines Bindungsspleißteils (4) der optischen Fasern des ersten und zweiten Glasfaserbands unter Verwendung der elektrischen Entladung, die zwischen dem Paar von Entladungselektroden erzeugt wird, während das Paar der Entladungselektroden sich so in der Richtung der Anordnung der optischen Fasern bewegt, dass mehr Wärmeenergie an die optischen Fasern, die näher an einem Zentrum der Anordnung der optischen Fasern positioniert sind, als die optischen Fasern, die von dem Zentrum weg positioniert sind, übertragen wird, wobei die Gesamtwärmeenergie, die an alle optischen Fasern durch die elektrische Entladung während des Bindungsspleißschritts und des Schritts des Erhitzens übertragen wird, im Wesentlichen einheitlich für jede der optischen Fasern ist.

2. Verfahren nach Anspruch 1, bei dem die optischen Fasern verschiedene Modenfelddurchmesser aufweisen, und bei dem der Schritt des Erhitzens c) unter solchen Temperatur- und Zeitbedingungen ausgeführt wird, dass die optischen Fasern selbst nicht geschmolzen werden und dass ein Dotand, der den Kernen der optischen Fasern hinzugefügt wurde, in Mantelbereiche der optischen Fasern thermisch diffundiert, um **dadurch** eine Differenz des Modenfelddurchmessers in dem Bindungsspleißteil zu korrigieren.

3. Verfahren nach Anspruch 1 oder 2, bei dem die Wärmeenergie, die an die optischen Fasern übertragen wird, durch Ändern einer Leistung der elektrischen Entladung gemäß der Position der optischen Fasern gesteuert wird.

4. Verfahren nach einem der vorhergehenden Ansprüche, bei dem die Wärmeenergie, die an die optischen Fasern übertragen wird, durch Ändern eines Zwischenraums zwischen den Entladungselektroden gemäß der Position der optischen Fasern gesteuert wird.

5. Verfahren nach einem der vorhergehenden Ansprüche, bei dem die Wärmeenergie, die an die optischen Fasern übertragen wird, durch Ändern einer Geschwindigkeit gesteuert wird, mit der die Entladungselektroden gemäß der Position der optischen Fasern bewegt werden.

6. Verfahren nach einem der vorhergehenden Ansprüche, bei dem das Paar der Entladungselektrode sich in einer axialen Richtung der optischen Fasern bewegt, so dass die Umgebung des Bindungsspleißteils über einen bestimmten Bereich erhitzt wird.

7. Vorrichtung zum Erhitzen einer Umgebung eines Bindungsspleißteils (4) von optischen Fasern (2) mittels einer elektrischen Entladung (8) nach einem Bindungsspleißen der optischen Fasern, wobei die optischen Fasern in einer Ebene parallel zueinander angeordnet sind, wobei die Vorrichtung umfasst:
wenigstens ein Paar von Entladungselektroden (7), die in einer Richtung senkrecht zur Ebene, in der die optischen Fasern angeordnet sind, vorgesehen sind;
einen Bewegungsmechanismus (20) zum Bewegen zumindest entweder der Entladungselektroden oder der optischen Fasern in der Richtung der Anordnung der optischen Fasern; und
eine Steuereinheit (31) zum Steuern einer Wärmeenergie, die an die optischen Fasern auf eine solche Weise übertragen wird, dass mehr Wärmeenergie an die optischen Fasern, die näher an einem Zentrum der Anordnung der optischen Fasern positioniert sind, als an die optischen Fasern, die von dem Zentrum weg angeordnet sind, übertragen wird, wobei die Gesamtwärmeenergie, die an alle optischen Fasern übertragen wird, die von der Wärmeenergie, die mittels der elektrischen Entladung während des Bindungsspleißschritts übertragen wurde, und der Wärmeenergie herrührt, die durch die Vorrichtung mit dem Heizschritt übertragen wird, im Wesentlichen einheitlich für jede der optischen Fasern ist.

8. Vorrichtung nach Anspruch 7, bei welcher der Bewegungsmechanismus die Entladungselektroden relativ zu den optischen Fasern bewegt.

9. Vorrichtung nach Anspruch 7, bei welcher der Bewegungsmechanismus die optischen Fasern relativ zu den Entladungselektroden bewegt.

10. Vorrichtung nach einem der Ansprüche 7 bis 9, bei welcher der Bewegungsmechanismus für das Bewegen von zumindest den Entladungselektroden oder den optischen Fasern in einer axialen Richtung der optischen Fasern vorgesehen ist.

## Revendications

1. Procédé pour chauffer un premier ruban de fibres optiques (1) et un second ruban de fibres optiques (1) par une décharge électrique (8), les premier et second rubans de fibres optiques possédant respectivement une pluralité de fibres optiques (2) disposées parallèlement les unes aux autres dans un plan, le procédé comportant les étapes consistant à :
a) épisser par fusion les fibres optiques des premier et second rubans de fibres optiques en utilisant une décharge électrique ;
b) disposer au moins une paire d'électrodes de décharge (7) dans une direction perpendiculaire au plan dans lequel sont disposées les fibres optiques ;
c) chauffer la proximité d'une partie d'épissure par fusion (4) des fibres optiques des premier et second rubans de fibres optiques en utilisant la décharge électrique générée entre la paire d'électrodes de décharge, tandis que la paire d'électrodes de décharge se déplace dans la direction d'agencement des fibres optiques de sorte que plus d'énergie thermique est appliquée aux fibres optiques positionnées à proximité du centre d'agencement des fibres optiques qu'aux fibres optiques positionnées à distance du centre, dans lequel l'énergie thermique totale appliquée à toutes les fibres optiques par la décharge électrique pendant l'étape d'épissure par fusion et l'étape de chauffage est sensiblement uniforme pour chacune des fibres optiques.

2. Procédé selon la revendication 1, dans lequel les fibres optiques possèdent différents diamètres de champ de mode, et dans lequel le chauffage au cours de l'étape c) est effectué sous des conditions de température et de temps telles que les fibres optiques elles-mêmes ne sont pas fondues et telles qu'un dopant ajouté aux âmes des fibres optiques diffuse thermiquement dans les revêtements des fibres optiques pour ainsi corriger une différence de diamètre de champ de mode dans la partie d'épissure par fusion.

3. Procédé selon la revendication 1 ou 2, dans lequel l'énergie thermique appliquée aux fibres optiques est contrôlée en modifiant une énergie de la décharge électrique conformément à la position des fibres optiques.

4. Procédé selon l'une quelconque des revendications précédentes, dans lequel l'énergie thermique appliquée aux fibres optiques est contrôlée en modifiant un intervalle entre les électrodes de décharge conformément à la position des fibres optiques.

5. Procédé selon l'une quelconque des revendications précédentes, dans lequel l'énergie thermique appliquée aux fibres optiques est contrôlée en modifiant une vitesse à laquelle les électrodes de décharge sont déplacées selon la position des fibres optiques.

6. Procédé selon l'une quelconque des revendications précédentes, dans lequel la paire d'électrodes de décharge se déplace dans une direction axiale des fibres optiques de sorte que la proximité de la partie d'épissure par fusion est chauffée au-dessus d'une plage prédéterminée.

7. Appareil pour chauffer la proximité d'une partie d'épissure par fusion (4) de fibres optiques (2) par une décharge électrique (8) après épissure par fusion des fibres optiques, les fibres optiques étant agencées parallèlement les unes aux autres dans un plan, l'appareil comportant :
au moins une paire d'électrodes de décharge (7) prévue dans une direction perpendiculaire au plan dans lequel sont disposées les fibres optiques ;
un mécanisme de déplacement (20) pour déplacer au moins une des électrodes de décharge et les fibres optiques dans la direction de l'agencement des fibres optiques ; et
une unité de contrôle (31) pour contrôler une énergie thermique appliquée aux fibres optiques de telle manière que plus d'énergie thermique est appliquée aux fibres optiques positionnées à proximité du centre de l'agencement des fibres optiques qu'aux fibres optiques positionnées à distance du centre, dans lequel l'énergie thermique totale appliquée à toutes les fibres optiques résultant de l'énergie thermique qui a été appliquée par la décharge électrique pendant l'étape d'épissure par fusion et l'énergie thermique qui est appliquée par l'appareil avec l'étape de chauffage est sensiblement uniforme pour chacune des fibres optiques.

8. Appareil selon la revendication 7, dans lequel le mécanisme de déplacement déplace les électrodes de décharge par rapport aux fibres optiques.

9. Appareil selon la revendication 7, dans lequel le mécanisme de déplacement déplace les fibres optiques par rapport aux électrodes de décharge.

10. Appareil selon l'une quelconque des revendications 7 à 9, dans lequel le mécanisme de déplacement est conçu pour déplacer au moins l'une des électrodes de décharge et les fibres optiques dans une direction axiale des fibres optiques.
